Europäisches Patentamt

European Patent Office

Office européen des brevets

(11) Publication number:

0 242 034
A2

## EUROPEAN PATENT APPLICATION

(21) Application number: 87301817.0

(22) Date of filing: 02.03.87

(51) Int. Cl.4: G02F 1/11

The title of the invention has been amended (Guidelines for Examination in the EPO, A-III, 7.3).

(30) Priority: 07.03.86 US 837119

(43) Date of publication of application:
21.10.87 Bulletin 87/43

(84) Designated Contracting States:
DE FR GB IT

(71) Applicant: WESTINGHOUSE ELECTRIC CORPORATION
Westinghouse Building Gateway Center
Pittsburgh Pennsylvania 15222(US)

(72) Inventor: Ryan, Frederick Merk
RD 1, Box 84
New Alexandria, PA 15670(US)
Inventor: Gottleib, Milton
2310 Marbury Road
Pittsburgh, PA 15221(US)

(74) Representative: van Berlyn, Ronald Gilbert
23, Centre Heights
London, NW3 6JG(GB)

(54) An acousto-optic tunable filter.

(57) An acousto-optic tunable filter to provide a minimum of resolution degradation when operated in a wavelength scan mode. A second face of the acousto-optic crystal opposite the first face on which the acoustic transducer is mounted is disposed so as to be non-parallel to the first face. As a result, acoustic waves launched into the acousto-optic crystal are reflected by the non-parallel second face resulting in the production of minimal diffraction of the light passing through the crystal by reflected acoustic waves.

FIG. I

## AN IMPROVED ACOUSTO-OPTIC TUNABLE FILTER

This invention relates to acousto-optic tunable filters. The improved acousto-optic tunable filter of this invention has a modified configuration which provides minimum resolution degradation when the acousto-optic tunable filter is operated in a wavelength scan mode.

The term acousto-optic filter refers to the fact that in certain birefringent optic materials, a light beam propagating as an e-ray or an o-ray, can under certain conditions, be converted into an o-ray or an e-ray, respectively, by interaction with, and diffraction from an acoustic wave propagating in the same medium. Both conversions occur simultaneously. This phenomenon has been utilized in producing narrow band optical filters in which the peak transmission wavelength can be selected by properly choosing the frequency of the acoustic wave. Such filters have typically operated in the visible spectral region using collinearly propagating acoustic and light beams in selected oxide materials. It is also known that the acoustic wave can be launched into the acoustic medium non-collinearly with the light beam in order to achieve the same acousto-optic narrow band filtering.

The development of new efficient acousto-optic materials such as thallium-arsenic-selenide are described in the specification of U.S. Patent No. 3,792,287, thallium-phosphorus-selenide per the specification of U.S. Patent No. 3,929,970, and thallium-arsenic-sulfide per the specification of U.S. Patent No. 3,799,659.

Acousto-optic tunable filters have been utilized in analytical devices which can be used to analyze reaction products of a wide variety of industrial processes. Acoustic-optic tunable filters can also be used in on-line multi-function analyzers which are needed in the chemical and petroleum industries to function as process analyzers to facilitate process control systems. An example of a system incorporating an acousto-optic device is taught in the specification of U. S. Patent NO. 4,490,845. This teaches an automated acousto-optic tunable filter infrared analzyer system in which a narrow bandpass tunable acousto-optic filter is selectively tuned by predetermined RF frequency signals to selectively transmit a narrow bandpass of interest which corresponds to a specific molecular species for identification and analysis. The aforementioned analysis system is set forth in greater detail in, "Automated Acousto-Optic Tunable Filter (AOTF) Infrared Analyzer", Proceedings of SPIE, International Society of Optical Engineering, Vol. 268, Pages 160-166, which is incorporated herein by reference.

An acousto-optic tunable filter (AOTF) is a device which may serve the function of a spectrometer or monochromator. The AOTF is a device in which sound waves interact with light inside of a crystal of a particular type and orientation. The interaction is specific in that the sound waves of a given wavelength, produced by exciting an attached transducer with RF energy of a given frequency, interact with light of a given wavelength. If broadband light is incident upon an AOTF, a narrow wavelength interval of light may be selectively interacted with or diffracted by exciting the transducer with the appropriate frequency. During operation of an AOTF, acoustic waves are launched from a transducer mounted on one face of the crystal. Acoustic waves travel through the crystal and strike the face opposite the transducer. When operating an AOTF with a continuous wave, fixed RF drive frequency, i.e., a fixed sound wavelength, reflection of sound from the side of the crystal opposite the transducer present no problem in the functioning of the AOTF. The reflected wave is equally able to produce diffraction of the incident light. Since the reflected wave is at the same wavelength as the sound waves generated at the transducer, the diffracted light from the reflections is at the identical wavelength, so that no loss of resolution or wavelength spread occurs.

However, in some applications, it is desirable to apply a frequency sweep RF drive to the transducer. This application produces a wavelength sweep of the diffracted light. Some loss of resolution naturally occurs, in that more than one sound wavelength is present in the optical aperture within the crystal, resulting in the diffraction of more than one wavelength resolution element of light. An even more serious loss in resolution occurs, however, when the first and subsequent reflections pass through the optical path. The reflections represent sound waves that were generated much earlier in time and are therefore in a sweep mode much further removed in wavelength. The resultant spread in optical wavelengths diffracted is therefore much broader and poor wavelengths resolution results. It has been suggested that an acousto-absorber be attached to the crystal face opposite the transducer face to attenuate sound reflection. In practice, acousto-absorbers are difficult to fabricate, they are not perfect and some sound is invariably reflected, leading to a degradation in crystal performance.

An object is to provide a configuration for an acousto-optic tunable filter which provides a minimum of resolution degradation when operated in a wavelength scan mode.

Also another object is to provide an acousto-optic tunable filter which is ideally suited for use in a frequency sweep RF drive mode of operation.

Yet another object is to provide an AOTF with a modified configuration that facilitates an increased duty cycle when used in an acousto-optic tunable filter system.

The present invention includes an acousto-optical tunable filter of the type in which an optically aligned acousto-optic crystal (13) has an optical input face (15) and an optical output face (19) through which a light is passed at a predetermined angle relative to the crystal optic axis, an acoustic transducer means (21) adapted to be coupled to an RF energy source is mounted onto a first face of the acousto-optic crystal in order to launch acoustic waves into the crystal, a selected bandwidth portion of the light being passed through the crystal is distinguished through diffraction from the remaining light as a function of the launched acoustic wave frequency, characterized in that a second face (23) of the acoustic-optic crystal opposite said first face on which the acoustic transducer means is mounted, which second face is non-parallel relative to said first face, so that acoustic waves launched into the acoustic crystal are reflected by said non-parallel second face such that acoustic waves reflected thereby produce minimal diffraction of the light passing through the crystal.

Conveniently, a selected narrow bandwidth portion of the light being passed to the crystal is distinguished through diffraction from the remaining light as a function of the launched acoustic wave frequency. The improvement to this AOTF comprises a second face of the acousto-optic crystal opposite the first face on which the acoustic transducer is mounted, which second face is non-parallel relative to the first face. With this new configuration, acoustic waves launched into the acoustic crystal are reflected by the non-parallel second face such that the reflected acoustic waves produce minimal diffraction of the light passing through the crystal because phase matching conditions between light and sound waves are not satisfied. Thus when operated in a wavelength scan mode, the acousto-optic tunable filter experiences a minimum of resolution degradation.

The RF energy source coupled to the acoustic transducer includes means for applying a frequency sweep RF drive to the acoustic transducer whereby a wavelength sweep of diffracted light is the output of the light passing through the acousto-optic crystal. Preferably, the non-parallel second face of the acousto-optic crystal opposite the face on which the transducer is mounted has between about an 8° to 30° deviation relative to the first face. The selected angle should be large enough to destroy the phase-match relationship between light and sound waves, but not so large as to interfere with the optical aperture of the crystal.

The invention will now be described, by way of example, with reference to the accompanying drawings in which:

Figure 1 is an enlarged representation of an acousto-optic tunable filter;

Figure 2 is a representation of diffracted light intensity versus time for a conventional acousto-optic tunable filter in which the crystal face opposite the crystal face on which the transducer is mounted is parallel to the transducer;

Figure 3 is a representation of diffracted light intensity versus time for an acousto-optic tunable filter; and

Figure 4 is a schematic diagram of an automated infrared analyzer system utilizing the acousto-optic tunable filter.

The invention provides an improved acousto-optic tunable filter (AOTF) which suffers a minimum of resolution degradation when operated in a wavelength scan mode. In conventional AOTF's the crystal face opposite the transducer is parallel to the transducer face. As a result, reflections of found traveling through the crystal strike the face opposite the transducer and tend to broaden the wavelength response. Accordingly, the elimination of this phenomenon is desirable. The present invention accomplishes this by changing the direction of reflection of the acoustic waves introduced into the optic crystal.

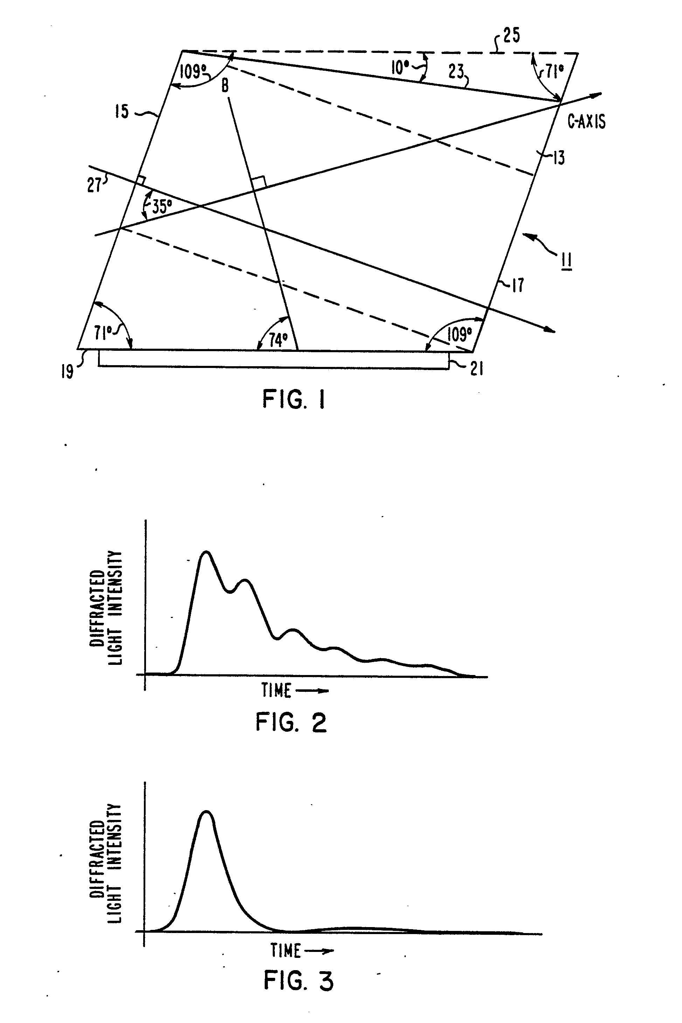

Figure 1 shows an acousto-optic tunable filter 11 including a crystal 13 having an optical input face 15, an optical output face 17, a first face 19 on which a transducer 21 is bonded and a second opposed face 23. There is shown in dashed line indicated by the reference character 25 the second face of an acousto-optical tunable filter configured according to conventional techniques known in the art. In conventional acousto-optic tunable filters, the face 25 is parallel with the first face 19 onto which the transducer 21 is bonded. The acoustic transducer 21 is mated to one of the opposed side surfaces of the crystal 13 and consists typically of an X-cut lithium niobate crystal plate which is attached to the acousto-optic crystal with an indium metal bond. A conductive electrode pattern is disposed on both sides of the lithium niobate transducer.

The optical input face 15 of the crystal 13 is cut so as to be normal to the incident light 27. The output face 17 is then cut so as to be normal to the diffracted light output of the crystal 13. During operation, acoustic waves launched by the transducer 21 into the crystal 13 interact with light passing through the crystal. These sound waves are reflected from the second face 23 of the crystal 13. These reflections can be made to lose their interaction properties with the light passing through the crystal through the redirecting of the reflected light by means of a non-parallel face 23 opposite the transducer 21. The non-parallel face 23 directs the reflected sound wave to prevent diffraction from occurring. The degree of deviation from parallel of the non-parallel face 23 is based at least in part on the design of the AOTF, i.e., the angle with which the incident light enters the crystal relative to the C axis of the AOTF crystal. In Figure 1, the angle of the incident light relative to the C axis is 35°. For this design, it has been found that an angle between a minimum of about 7° to a maximum of about 30°, preferably about 10°, is sufficient to destroy the interaction. It has been found that 10° deviation from parallel relative to the transducer face 19 is sufficient to destroy the interaction. This change to the AOTF configuration eliminates the difficulties encountered with sound wave reflected from the parallel face opposite the transducer as found in a conventional AOTF. In the case of the 35° design AOTF of Figure 1, if the angle is made larger than about 30°, a portion of the optical path through the AOTF (the region between the dotted lines) will be eliminated. Therefore, in a 35° design AOTF, the angle should be no less than about 7° and no larger than about 30°. These limits will vary for other design acousto-optic devices with the minimum angle required getting larger for designs over 35° and the maximum angle required getting smaller for designs over 35°. For designs of less than 35°, the minimum angle becomes smaller and the maximum angle become larger. In other words, the angle should be selected so as to be large enough to destroy the phase-match relationship between the light and sound waves, but small enough so as not to adversely effect the optical aperture. In the example described and illustrated herein, these angles are between about 7° to 30°, respectively. As a result of the new configuration taught herein, the AOTF as shown in Figure 1 can be utilized in a frequency scan operation with no loss in resolution.

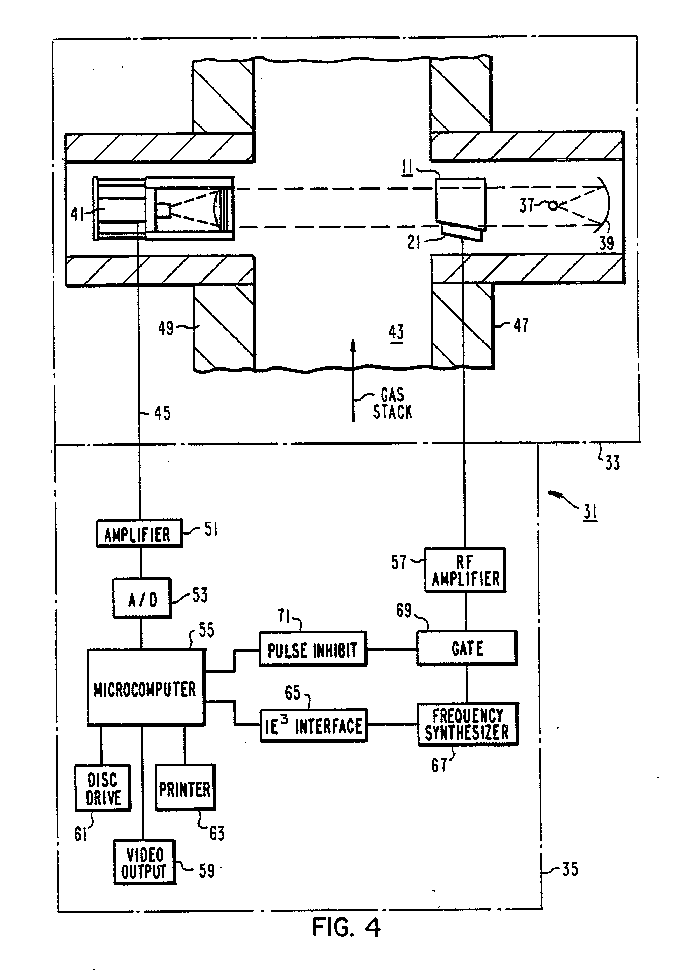

The significant advantage provided through the use of the present invention is graphically demonstrated in Figures 3 and 4. In Figure 3, the diffracted light intensity versus time for a conventional acousto-optic tunable filter with the face parallel to the transducer, shows that a single pulse of RF excitation produces operation of the AOTF not only in its first pass through the crystal, but in its multiple reflections as shown in Figure 2. Thus, in a wavelength or frequency sweep mode of operation, these reflections represent in time wavelengths far removed from the initial wavelength. In comparison, by utilizing an acousto-optic tunable filter with the configuration shown in Figure 1 in which the crystal face opposite the face on which the transducer is mounted is non-parallel to that transducer face, reflections from operating the AOTF are substantially eliminated. As a result of utilizing the configuration of the AOTF shown in Figure 1, a minimum of resolution degradation occurs when the AOTF is operated in a wavelength scan mode. Because reflected waves result in a broadening of the wavelength response, their elimination is desirable and this is accomplished by changing their direction of reflection through the modification of the face of the crystal opposite the face on which the transducer is mounted.

In Figure 4, there is illustrated a schematic representation of an acousto-optic tunable filter infrared analyzer system incorporating the features of this invention. The system is generally indicated by the reference character 31 and is configured from several subsystems and components including an acousto-optic tunable filter 11. The analyzer system 31 can be viewed as having two major subsystems, an optic subsystem 33 and an electronic subsystem 35. The optical system 33 of the analyzer system 31 is essentially an infrared solid state spectrometer which has been designed to permit operation over a relatively wide spectral range. An infrared radiation source 37 such as a Nernst glower, is used as the primary source of broadband infrared radiation for the system. A portion of the output infrared radiation from the source 37 is collected and collimated by a mirror 39. The collimated beam from the mirror 39 is passed through the AOTF 13 in which a narrow bandwidth portion of the radiation is selected and distinguished form the remaining infrared radiation as shown in the dashed lines of Figure 4. A detector means 41 is aligned so as to collect the spatially separated narrow band interaction radiation output from the AOTF 13 after it passes through an environment of interest generally indicated by the reference character 43 such as, for example, an industrial process stack. The detector means 41 provides an output via line 45 for processing in a manner to be described below. The environment of interest in the particular application illustrated herein is a stack gas of, for example, an industrial processing plant or a utility, and is generally indicated by the reference character 43. As can be seen from the schematic illustration of Figure 4, the stack 43 includes opposed sidewalls 47 and 49. In this configuration, the detector means 41 and the source means containing the AOTF 11 are placed on opposite sides of the stack 43. By separating the detector and the AOTF, the angular displacement of the narrow band interacted radiation is adequate to separate it spatially from the broadband non-interacted radiation at the detector. This process generally described above can be studied in detail through reference to the specification of U.S. Patent No. 4,490,845.

In the electronic system 35, the analog output signal from the infrared detector means 41 is provided via line 45 to an amplifier 51 and then to an analog-to-digital converter 53 with the resultant digital signal applied to a microcomputer 55. The electrical system 17 interfaces with the optical system 15 at the acousto-optic tunable filter 11 via the transducer 21 which is connected to the RF amplifier 57. A selected frequency RF drive power or a scanning RF frequency drive power is applied via the transducer in order to launch acoustic waves into the crystal 13. In this way, optically filtered infrared radiation can be detected and utilized by the microcomputer to determine the absorption resulting from the presence of selected gases in the gas stack 25. The microcomputer 55 typically has a video output means 59 associated therewith for visual display of detected signals, as well as memory means such as a disc drive 61 and a printer 63. The memory means 61 stores the control and operation signal for the system. The microcomputer 55 through an appropriate interface means 65, when supplied with control signals from the memory means 61, controls the output frequency and amplitude from a frequency synthesizer 67 which is connected by a gate means 69 to the RF amplifier 57 for controlled operation. The gate 69 can be utilized in conjunction with a pulse inhibit circuit means 71 in order to provide assurance that the RF power duty cycle is limited to a load level which does not overheat the crystal 13.

The system described above is thus capable of operating in several modes including a rapidly tunable narrow band infrared filter mode, a solid state optical chopper mode and an infrared filter operated in a sweep mode with an increase in resolution of the optical bandwidth.

In an infrared analyzer system, it has been determined that the use of a sweep mode operation has resulted in an increase in resolution of the optical bandwidth of over a factor of 3. Thus, through a basic change in one face of the optical crystal, a narrower bandwidth can be achieved and problems heretofore resolved through increased duty cycle time have been eliminated.

## Claims

1. An acousto-optic tunable filter (11) of the type in which an optically aligned acousto-optic crystal (13) has an optical input face (15) and an optical output face (19) through which a light is passed at a predetermined angle relative to the crystal optic axis, an acoustic transducer means (21) adapted to be coupled to an RF energy source is mounted onto a first face of the acousto-optic crystal in order to launch acoustic waves into the crystal, a selected bandwidth portion of the light being passed through the crystal is distinguished through diffraction from the remaining light as a function of the launched acoustic wave frequency, characterized in that a second face (23) of the acousto-optic crystal opposite said first face on which the acoustic-optic transducer means is mounted, which second face is non-parallel relative to said first face, so that acoustic waves launched into the acoustic crystal are reflected by said non-parallel second face such that acoustic waves reflected produce minimal diffraction of the light passing through the crystal.

2. A filter as claimed in claim 1 wherein the RF energy source coupled to the acoustic transducer means includes means for applying a frequency sweep RF drive to the acoustic transducer means so that a wavelength sweep of diffracted light is provided from the output of the light passing through the acousto-optic crystal.

3. A filter as claimed in claim 1 wherein the non-parallel face of the acousto-optic crystal opposite the first face on which the acoustic transducer means is mounted, has a deviation relative to the first face seleced to be no less than about 7° and no.grater than about 30°.

4. A filter as claimed in claim 3 wherein the non-parallel second face of the acousto-optic crystal opposite the first face on which the acoustic transducer means is mounted has a 10° deviation relative to the first face.

5. A filter as claimed in claims 1 to 4 wherein the predetermined angle relative to the crystal optic axis, at which light enters the acousto-optic crystal is 35° and the non-parallel second face is selected to have a deviation relative to the first face selected to be no less than about 7° and no greater than about 30°.

6. A filter as claimed in claim 5 wherein the crystal is of a compound selected from the group consisting of thallium-arsenic-selenide, thallium-phosphorus-selenide, and thallium-arsenic-sulfide.

FIG. 1

FIG. 2

FIG. 3

FIG. 4